# EUROPEAN PATENT SPECIFICATION

(11) **EP 3 964 450 B1**
(45) Date of publication and mention of the grant of the patent: **12.11.2025**
(21) Application number: 20798404.8
(22) Date of filing: 24.04.2020
(51) Int. Cl.: B65D 47/08, B65D 75/58

(54) **BLISTER PACKAGING CONTAINER HAVING SHOULDER PART-INTEGRATED FLIPTOP CAP**
BLISTERVERPACKUNGSBEHÄLTER MIT IN SCHULTERTEIL INTEGRIERTER FLIPTOP-KAPPE
RÉCIPIENT D'EMBALLAGE-COQUE AYANT UN CAPUCHON SUPÉRIEUR INTÉGRÉ À UNE PARTIE D'ÉPAULE

(30) Priority: 02.05.2019 KR 20190051218
(43) Date of publication of application: 09.03.2022
(73) Proprietor: Blisspack Co., Ltd., Siheung-si, Gyeonggi-do 15104 (KR)
(72) Inventor: AHN, Jong Won, Seoul 06906 (KR)
(74) Representative: Ruzzu, Giammario
(86) International application number: PCT/KR2020/005467
(87) International publication number: WO 2020/222467

(56) References cited:
- JP-A- 2019 043 575
- JP-A- H07 165 249
- KR-A- 20180 071 672
- KR-B1- 101 181 302
- US-A1- 2008 073 348

## Description

### [Technical Field]

The present invention relates to a blister packaging container that is configured to allow a container part of a given space to be provided by thermoforming a plastic film or sheet, to fill medicine or other products in the container part of the given space, and to attach a cover sheet to the inlet of the container part to seal the container part.

### [Background Art]

Generally, a blister packaging container is made by heating and plasticizing a thermoplastic sheet, placing the thermoplastic sheet on a mold, molding the thermoplastic sheet to a container part by means of compression or vacuum molding, filling contents into the container part, and bonding a cover formed of a sheet of paper or plastic laminate film only to the flat flange portion of the container part by means of heat sealing, high frequency bonding, ultrasonic bonding, or the like, and the blister packaging container is widely used for packaging food, daily supplies, miscellaneous goods, industrial products, tablet medicine, liquid cosmetics, and the like.

Further, the blister packaging container includes a container part for accommodating contents therein, a discharge hole formed on one end of the container part, and a cover film for sealing the discharge hole, and to use the contents accommodated in the container part, generally, the discharge hole is bent to open or the cover film is removed from the discharge hole. After the discharge hole has been open once, however, it is impossible to close the discharge hole again.

To solve such problems, there is provided a conventional blister packaging container including a container part protruding to a given shape and having a short pipe-like discharge hole formed on top end thereof and a cover sheet attached to the flange of the container part and having a bonding part attached to the flange to perform a bonding function, a non-bonding part easily taken by a user when separated and removed from the container part, and a non-bonding discharging part with a given area adapted to communicate with the discharge hole of the container part, wherein the container part includes: a folding inducing groove concavely formed transversely with respect to the flange close to the top end of the discharge hole to perform bending line setting and
folding sealing piece disposed above the folding inducing groove; one pair of locking pieces protruding from both ends of the folding sealing piece and having locking protrusions from the top ends of the inner sides thereof; one pair of locking side portions disposed under both ends of the folding inducing groove on the edges of the flange to allow the locking protrusions to be selectively locked supportedly thereonto; an incised portion formed inside the folding sealing piece on the lower edges of the locking pieces to apply elastic deforming forces with respect to bending to the locking pieces; and a loop piece extended integrally from top of the folding sealing piece and having a locking hole.

When the discharge hole is closed again after the discharge hole has been open, in the conventional blister packaging container, the folding sealing piece connected to the discharge hole is folded to compress the opening space of the discharge hole, and the folding sealing piece is thus supportedly fixed to the discharge hole as the pair of locking pieces disposed on both ends thereof is locked onto the edge of the discharge hole.

If an external force is applied to the pair of locking pieces, accordingly, the pair of locking pieces escapes from the edge of the discharge hole to cause the compression of the folding sealing piece against the discharge hole to be released, so that an empty space between the folding sealing piece and the discharge hole may occur, thereby undesirably permitting the leakage of the contents in the container part.

Document KR 10-1181302 discloses a resealable blister package with a cover integrally connected to the upper part of the package. Bending induction ribs are protruded from both sides of a discharge pipe and have a depression part. Document KR 10-1181302 does not disclose a stepped portion formed steppedly along the complete edge periphery and the cap.

### [Disclosure] [Technical Problem]

Accordingly, the present invention has been made in view of the above-mentioned problems occurring in the related art, and it is an object of the present invention to provide a blister packaging container having a shoulder part-integrated fliptop cap that is capable of opening and closing a container part multiple times and preventing an empty space from occurring when the container part is closed again, thereby improving sealing ability thereof.

### [Technical Solution]

To accomplish the above-mentioned objects, according to the present invention, there is provided a blister packaging container as set out in claim 1.

Further, the fliptop cap may include a locking portion protruding from the inner peripheral surface of the discharge hole to compressingly fix the opening and closing protrusion thereto.

Further, the fliptop cap may include a guide portion formed on one end of the discharge hole into which the opening and closing protrusion is inserted in such a manner as to be enlarged in diameter toward the discharging direction of the contents, and the opening and closing protrusion is enlargedly formed in diameter toward the discharging direction of the contents in the state of being inserted into the discharge hole.

Moreover, the opening and closing protrusion may have a maximum diameter portion smaller than a maximum diameter portion of the guide portion and larger than a minimum diameter portion of the guide portion.

The blister packaging container may further include a packaging part extended from the inlet of the container part to sealingly accommodate the fliptop cap therein; and a cut-off line formed on a connection portion between the container part and the packaging part.

Further, the packaging part may include an accommodation portion in which the cap hinge is accommodated, and the accommodation portion protrudes outwardly from a given portion of the packaging part.

Moreover, the cap hinge may include a first connection portion connected to the cap body, a second connection portion connected to the cap cover, and a folding portion connecting the first connection portion and the second connection portion, the first connection portion and the second connection portion being folded to each other around the folding portion and being tapered toward the folding portion, so that in a state where the inner surface of the first connection portion comes into contact with the inner surface of the second connection portion, the inner surface of the first connection portion is parallel to the inner surface of the second connection portion, and the outer surface of the first connection portion is formed as a first inclined surface that is slant from the inner surface of the first connection portion, while the outer surface of the second connection portion is being formed as a second inclined surface that is slant from the inner surface of the second connection portion.

### [Effective Advantages of the Invention]

According to the present invention, the blister packaging container is capable of opening and closing the container part multiple times through the opening and closing protrusion of the cap cover for opening and closing the discharge hole of the cap body and preventing an empty space from occurring when the container part is closed again, thereby improving sealing ability thereof.

### [Description of Drawings]

FIG. 1 is a side view showing a blister packaging container having a shoulder part-integrated fliptop cap according to the present invention.
FIG. 2 is a plan perspective view showing a fliptop cap of the blister packaging container according to the present invention.
FIG. 3 is a bottom perspective view showing the fliptop cap of the blister packaging container according to the present invention.
FIG. 4 is a front view showing a state where the fliptop cap is open.
FIG. 5 is a sectional view showing a state where the fliptop cap is open.
FIG. 6 is a sectional view showing a state where the fliptop cap is closed.
FIG. 7 is a front view showing a state where a packaging part is provided to the blister packaging container according to the present invention.
FIG. 8 is a side view showing the state where the packaging part is provided to the blister packaging container according to the present invention.
FIG. 9 is an exploded view showing a state where the packaging part is separated from the blister packaging container according to the present invention.
FIG. 10 is an exploded perspective view showing other examples of the shoulder part and the fliptop cap of the blister packaging container according to the present invention.

### [Best Mode for Invention]

Hereinafter, the present invention will be explained in detail with reference to the attached drawings.

The attached drawings herein illustrate just embodiments of the present invention and serve to facilitate the general understanding of the scope of the present invention, together with the detailed description of the present invention. Therefore, the present invention is not limitedly interpreted only with the attached drawings.

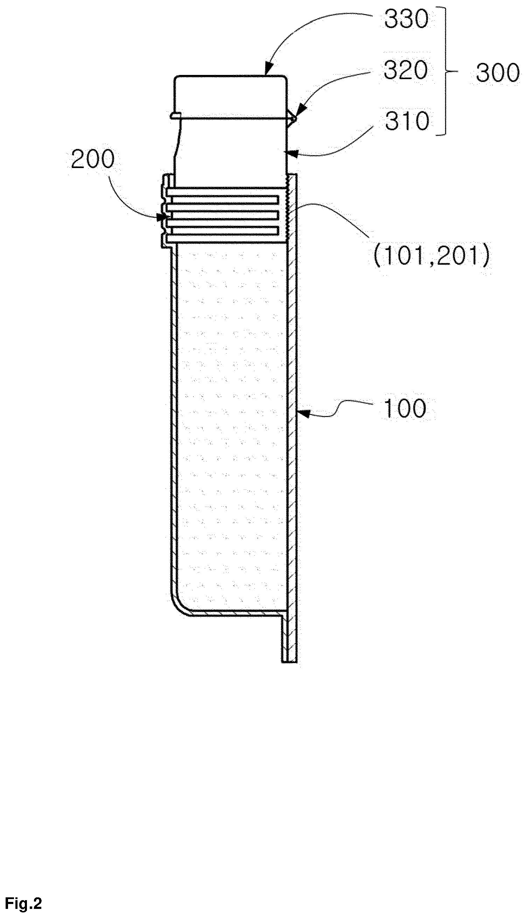

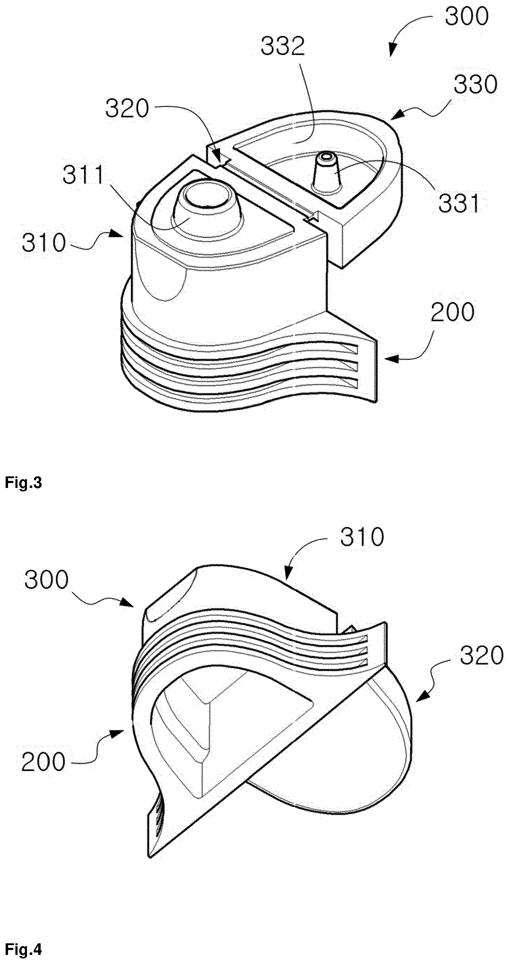

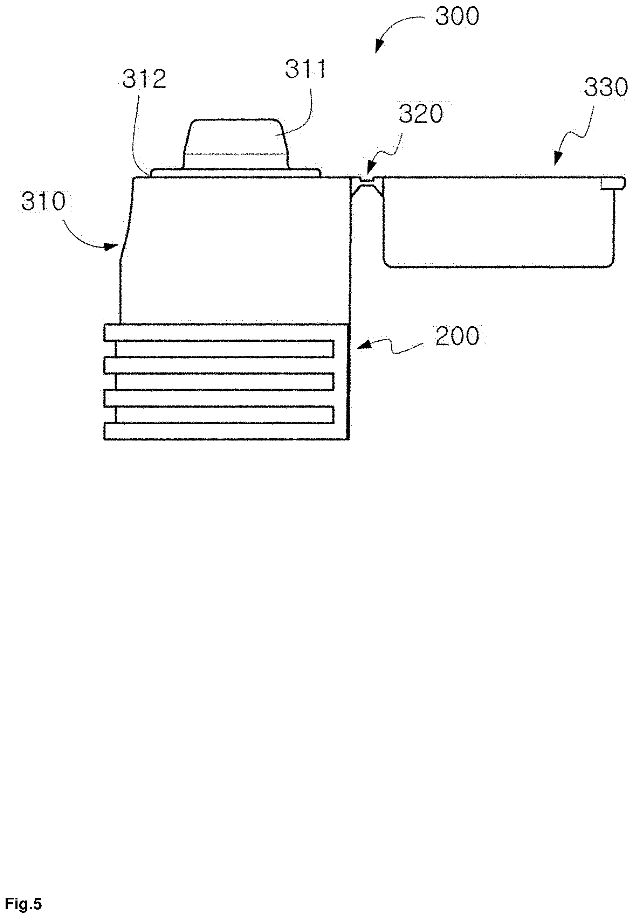

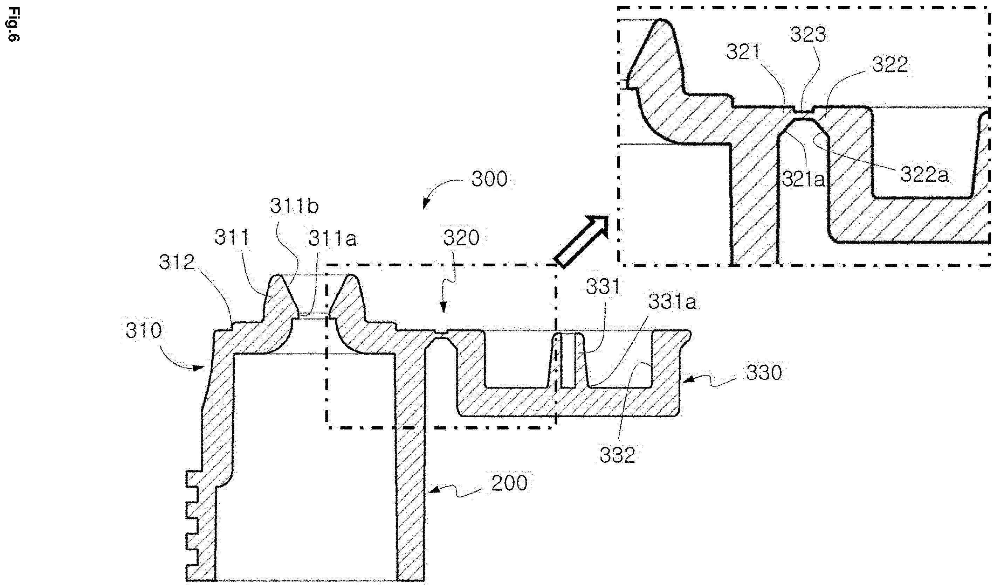

FIG. 1 is a side view showing a blister packaging container having a shoulder part-integrated fliptop cap according to the present invention, FIG. 2 is a plan perspective view showing a fliptop cap of the blister packaging container according to the present invention, FIG. 3 is a bottom perspective view showing the fliptop cap of the blister packaging container according to the present invention, FIG. 4 is a front view showing a state where the fliptop cap is open, FIG. 5 is a sectional view showing a state where the fliptop cap is open, and FIG. 6 is a sectional view showing a state where the fliptop cap is closed.

As shown in FIGs. 1 to 6, the blister packaging container having a shoulder part-integrated fliptop cap according to the present invention includes a container part 100, a shoulder part 200, and a fliptop cap 300.

The container part 100 is manufactured by heating a sheet, inserting the sheet into a mold, molding an accommodation space, filling contents into the accommodation space of the sheet, attaching a film to the sheet, and cutting the sheet to a predetermined shape.

In this case, the sheet is made of a plastic laminate material, and the film is attached to the sheet by means of high frequency or ultrasonic rolls.

The shoulder part 200 is fixedly inserted into the inlet of the container part 100, is hollow at the inside thereof, and passes the contents stored in the container part 100 therethrough.

Further, the shoulder part 200 has a shoulder concave and convex portion 201 formed along the outer peripheral surface thereof to improve sealing with the inner peripheral surface of the container part 100. Also, the container part 100 has a container concave and convex portion 101 formed along the inner peripheral surface coming into contact with the outer peripheral surface of the shoulder part 200 to improve sealing with the outer peripheral surface of the shoulder part 200.

The fliptop cap 300 serves to adjust an amount of contents discharged and includes a cap body 310 and a cap cover 330.

The cap body 310 is a basic body of the fliptop cap 300 connected integrally with the shoulder part 200 and has a discharge hole 311 for discharging the contents therefrom.

In this case, the discharge hole 311 is conically shaped to decrease the discharging speed of the contents.

The cap cover 330 functions to open and close the discharge hole 311, is foldably connected to the cap body 310 through a cap hinge 320, and has an opening and closing protrusion 331 inserted into the discharge hole 311 to seal the discharge hole 311.

Accordingly, the blister packaging container having a shoulder part-integrated fliptop cap according to the present invention is configured to allow the container part 100 to be open and closed multiple times by means of the opening and closing protrusion 331 of the cap cover 330 that opens and closes the discharge hole 311 of the cap body 310 and to prevent an empty space from being formed when the container part 100 is closed again to thus improve the sealing ability thereof.

As shown in FIGs. 5 and 6, the discharge hole 311 of the fliptop cap 300 includes a locking portion 311a protruding from the inner peripheral surface thereof to compressingly fix the opening and closing protrusion 331 thereto.

In specific, the locking portion 311a is a stepped portion with a minimum diameter at the inside of the discharge hole 311.

In a state where the opening and closing protrusion 331 is inserted into the discharge hole 311, accordingly, the locking portion 311a compressingly fixes the opening and closing protrusion 331 thereto, and as the locking portion 311a compresses the opening and closing protrusion 331 inwardly, in this case, the opening and closing protrusion 331 becomes open outwardly to thus come into close contact with the locking portion 311a, thereby improving the sealing with the locking portion 311a. So as to more strengthen the sealing ability between the opening and closing protrusion 331 and the locking portion 311a, in this case, the opening and closing protrusion 331 is made of an elastic material.

Further, the discharge hole 311 of the fliptop cap 300 includes a guide portion 311b formed on one end into which the opening and closing protrusion 331 is inserted in such a manner as to be enlarged in diameter toward the discharging direction of the contents, and the opening and closing protrusion 331 is enlargedly formed in diameter toward the discharging direction of the contents in the state of being inserted into the discharge hole 311.

That is, the guide portion 311b is conically shaped, and further, the opening and closing protrusion 331 is conically shaped.

Further, the guide portion 311b serves to guide the opening and closing protrusion 331 inserted into the discharge hole 311 to the inside of the discharge hole 311.

According to the configuration of the fliptop cap 300, further, the opening and closing protrusion 331 has a maximum diameter portion 331a smaller than the maximum diameter portion of the guide portion 311b and larger than a minimum diameter portion of the guide portion 311b.

That is, the diameter of the maximum diameter portion 331a of the opening and closing protrusion 331 is set between the maximum diameter portion and the minimum diameter portion of the guide portion 311b, and if the opening and closing protrusion 331 is inserted into the guide portion 311b of the discharge hole 311, accordingly, the maximum diameter portion 331a of the opening and closing protrusion 331 does not pass through the guide portion 311b, so that the maximum diameter portion 331a of the opening and closing protrusion 331 or a specific portion with a diameter smaller than the maximum diameter portion 331a is seated onto the guide portion 311b.

According to the configuration of the fliptop cap 300, further, the cap body 310 includes a stepped portion 312 formed steppedly on the edge periphery of one surface where the discharge hole 311 is formed, and the cap cover 330 has a concave portion 332 concavely formed at the inner surface thereof, so that the stepped portion 312 of the cap body 310 is fittedly inserted into the concave portion 332 of the cap cover 330.

That is, the concave portion 332 is formed concavely on the inner surface of the cap cover 330 facing the cap body 310 in the state where the opening and closing protrusion 331 of the cap cover 330 is inserted into the discharge hole 311 of the cap body 310.

Accordingly, the fliptop cap 300 has first sealing through the fitting coupling between the concave portion 332 of the cap cover 330 and the stepped portion 312 of the cap body 310 and second sealing through the compressing fixing between the opening and closing protrusion 331 of the cap cover 330 and the locking portion 311a of the discharge hole 311 of the cap body 310, thereby more strengthening the sealing ability thereof.

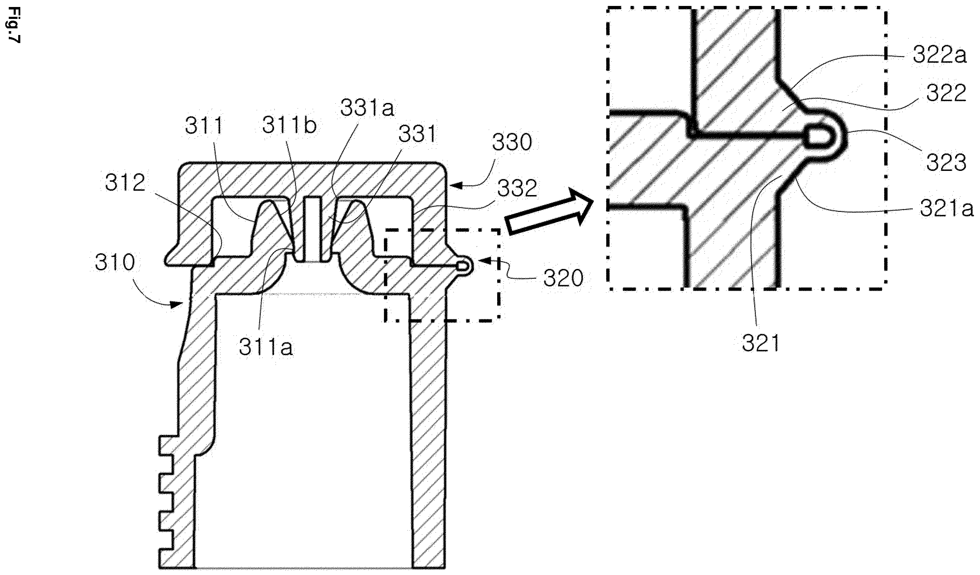

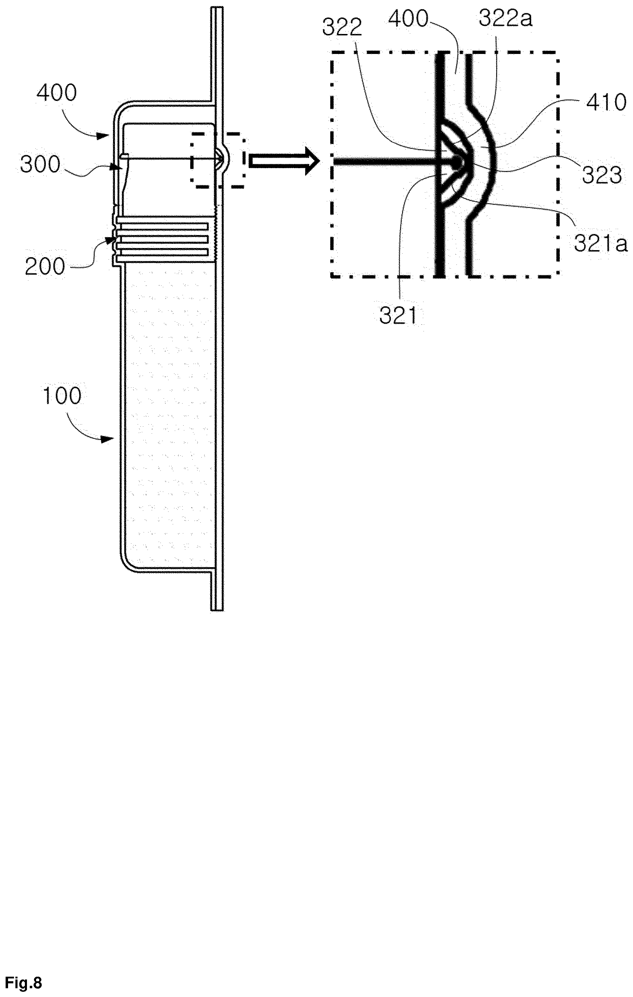

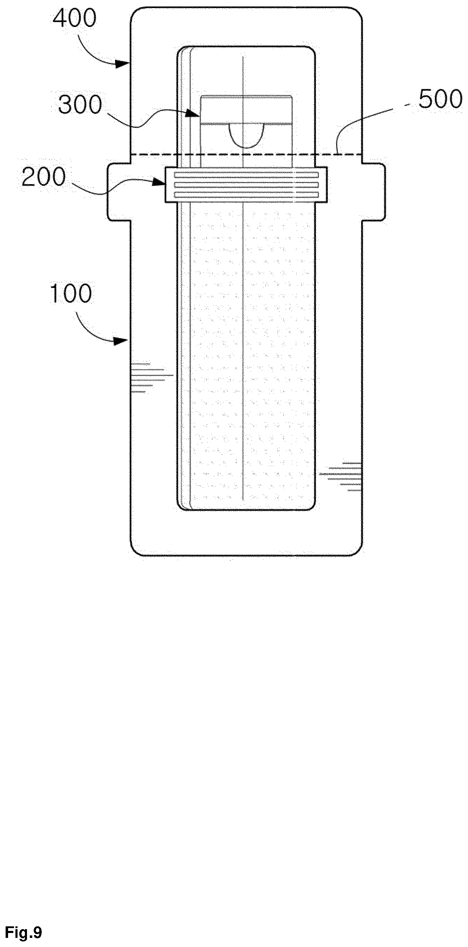

FIG. 7 is a front view showing a state where a packaging part is provided to the blister packaging container according to the present invention, FIG. 8 is a side view showing the state where the packaging part is provided to the blister packaging container according to the present invention, and FIG. 9 is an exploded view showing a state where the packaging part is separated from the blister packaging container according to the present invention.

As shown in FIGs. 7 to 9, the blister packaging container having a shoulder part-integrated fliptop cap according to the present invention further includes a packaging part 400 and a cut-off line 500.

The packaging part 400 is extended from the inlet of the container part 100 to sealingly accommodate the fliptop cap 300 therein.

That is, the packaging part 400 serves to package the fliptop cap 300, and when the contents of the container part 100 are first used by a user, the packaging part 400 is separated and removed from the container part 100 by cutting the cut-off line 500.

Further, the packaging part 400 is made of the same material as the container part 100.

The cut-off line 500 is formed on a connection portion between the container part 100 and the packaging part 400, and so as to reduce a cut-off resistance, the sectional area of the cut-off line 500 is smaller than that of the packaging part 400.

Referring again to FIGs. 7 and 8, the packaging part 400 has an accommodation portion 410 as a space in which the cap hinge 320 is accommodated, and the accommodation portion 410 protrudes outwardly from a given portion of the packaging part 400.

In this case, the accommodation portion 410 has a curved surface with a given curvature along the given portion of the packaging part 400 and is formed with an arch-shaped section.

Referring again to FIGs. 5 and 8, the cap hinge 320 includes a first connection portion 321 connected to the cap body 310, a second connection portion 322 connected to the cap cover 330, and a folding portion 323 connecting the first connection portion 321 and the second connection portion 322.

In this case, the first connection portion 321 and the second connection portion 322 are folded to each other around the folding portion 323, and the folding portion 323 has the shape of a plate.

Further, the first connection portion 321 and the second connection portion 322 are tapered toward the folding portion 323.

Moreover, in a state where the first connection portion 321 and the second connection portion 322 are folded to allow the inner surface of the first connection portion 321 to come into contact with the inner surface of the second connection portion 322, the inner surface of the first connection portion 321 is parallel to the inner surface of the second connection portion 322.

Further, in a state where the first connection portion 321 and the second connection portion 322 are folded to allow the inner surface of the first connection portion 321 to come into contact with the inner surface of the second connection portion 322, the outer surface of the first connection portion 321 is formed as a first inclined surface 321a that is slant from the inner surface of the first connection portion 321, and the outer surface of the second connection portion 322 is formed as a second inclined surface 322a that is slant from the inner surface of the second connection portion 322.

Referring again to FIGs. 5 and 8, in a state where the first connection portion 321 and the second connection portion 322 of the cap hinge 320 are folded to allow the inner surface of the first connection portion 321 to come into contact with the inner surface of the second connection portion 322, the folding portion 323 is curved with a given curvature, and the first inclined surface 321a and the second inclined surface 322a do not protrude outwardly, so that when the cap hinge 320 is inserted into the packaging part 400, the packaging part 400 can be prevented from being damaged by the cap hinge 320.

Referring again to FIGs. 2 and 3, further, one surface of the cap body 310 in a horizontal direction is curved, and the other surface thereof in the horizontal direction is flat, so that the cap hinge 320 is horizontally connected to the flat surface of the cap body 310. While the cap body 310 and the cap cover 330 are being folded to each other, accordingly, a pressure applied to the cap hinge 320 located between the cap body 310 and the cap cover 330 can be uniformly distributed to the cap hinge 320.

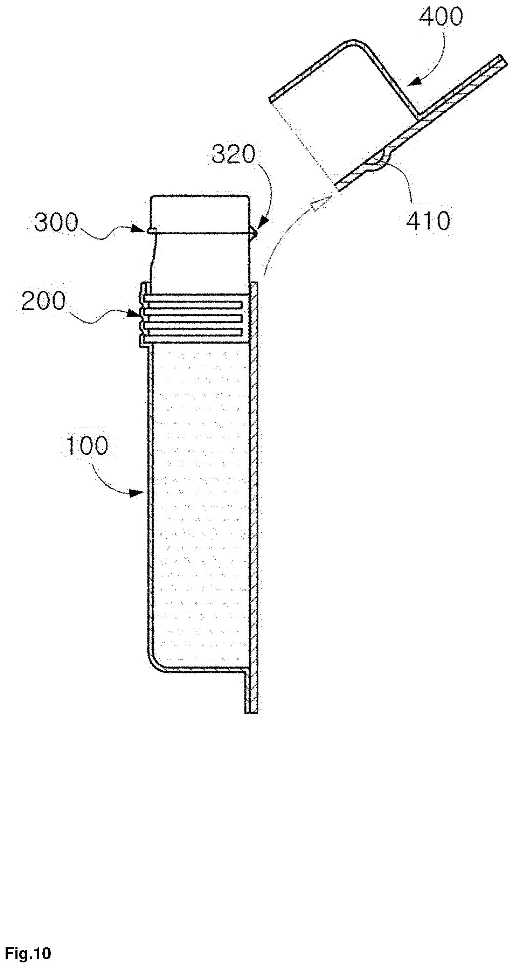

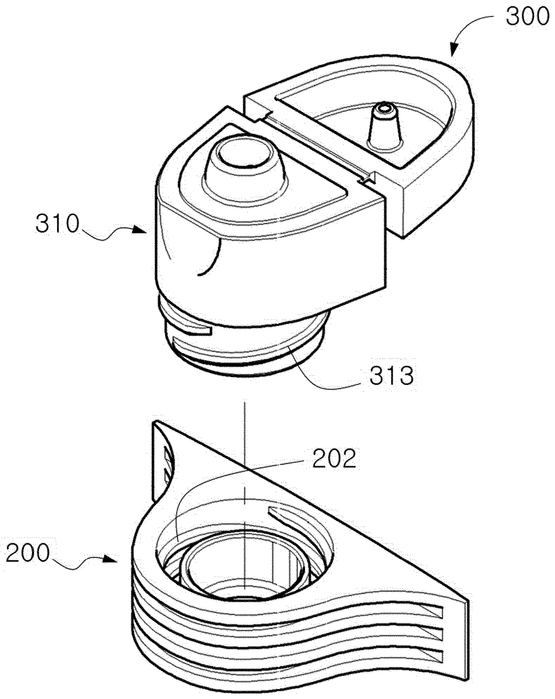

FIG. 10 is an exploded perspective view showing other examples of the shoulder part and the fliptop cap of the blister packaging container according to the present invention.

As shown in FIG. 10, a shoulder part 200 and a fliptop cap 300 are separable from each other. Further, the shoulder part 200 has a should screw thread 202, and the fliptop cap 300 has a cap screw thread 313 formed on the cap body 310 thereof, so that they can be coupled to each other by means of the screw coupling between the should screw thread 202 and the cap screw thread 313.

The present invention may be applied to various fields related to food, cosmetics, medicine, daily supplies, and industrial products, without being limited thereto.

While the present invention has been described with reference to the particular illustrative embodiments, it is not to be restricted by the embodiments but only by the appended claims. It is to be appreciated that those skilled in the art can change or modify the embodiments within the scope of the appended claims.

## Claims

1. A blister packaging container comprising:
a container part (100) for accommodating contents therein;
a shoulder part (200) fixedly inserted into an inlet of the container part (100); and
a fliptop cap (300) comprising a cap body (310) connected integrally with the shoulder part (200) and having a discharge hole (311) adapted to discharge the contents therefrom and a cap cover (330) foldably connected to the cap body (310) through a cap hinge (320) and having an opening and closing protrusion 331 insertable into the discharge hole (311) to seal the discharge hole (311);
said blister packaging being **characterized in that** the cap body (310) comprises a stepped portion (312) formed steppedly on the edge periphery of one surface where the discharge hole (311) is formed, and the cap cover (330) comprises a concave portion (332) concavely formed at the inner surface thereof, so that the stepped portion (312) of the cap body (310) is fittedly inserted into the concave portion (332) of the cap cover (330).

2. The blister packaging container according to claim 1, wherein the fliptop cap (300) comprises a locking portion (311a) protruding from the inner peripheral surface of the discharge hole (311) to compressingly fix the opening and closing protrusion (331) thereto.

3. The blister packaging container according to claim 2, wherein the fliptop cap (300) comprises a guide portion (311b) formed on one end of the discharge hole (311) into which the opening and closing protrusion (331) is inserted in such a manner as to be enlarged in diameter toward the discharging direction of the contents, and the opening and closing protrusion (331) is enlargedly formed in diameter toward the discharging direction of the contents in the state of being inserted into the discharge hole (311).

4. The blister packaging container according to claim 3, wherein the opening and closing protrusion (331) has a maximum diameter portion (331a) smaller than a maximum diameter portion of the guide portion (311b) and larger than a minimum diameter portion of the guide portion (311b).

5. The blister packaging container according to claim 1, further comprising:
a packaging part (400) extended from the inlet of the container part (100) to sealingly accommodate the fliptop cap (300) therein; and
a cut-off line (500) formed on a connection portion between the container part (100) and the packaging part (400).

6. The blister packaging container according to claim 5, wherein the packaging part (400) comprises an accommodation portion (410) in which the cap hinge (320) is accommodated, and the accommodation portion (410) protrudes outwardly from a given portion of the packaging part (400).

7. The blister packaging container according to claim 6, wherein the cap hinge (320) comprises a first connection portion (321) connected to the cap body (310), a second connection portion (322) connected to the cap cover (330), and a folding portion (323) connecting the first connection portion (321) and the second connection portion (322), the first connection portion (321) and the second connection portion (322) being folded to each other around the folding portion (323) and being tapered toward the folding portion (323), so that in a state where the inner surface of the first connection portion (321) comes into contact with the inner surface of the second connection portion (322), the inner surface of the first connection portion (321) is parallel to the inner surface of the second connection portion (322), and the outer surface of the first connection portion (321) is formed as a first inclined surface (321a) that is slant from the inner surface of the first connection portion (321), while the outer surface of the second connection portion (322) is being formed as a second inclined surface (322a) that is slant from the inner surface of the second connection portion (322).

## Patentansprüche

1. Blisterverpackungsbehälter, umfassend:
einen Behälterteil (100) zur Aufnahme von Inhalt darin;
einen Schulterteil (200), der fest in einen Einlass des Behälterteils (100) eingesetzt ist; und
eine Klappkappe (300), die einen Kappenkörper (310), der integral mit dem Schulterteil verbunden ist (200) und eine Auslassöffnung (311) aufweist, die zum Auslassen des Inhalts aus diesem geeignet ist, und eine Kappenabdeckung (330), die über ein Kappenscharnier (320) faltbar mit dem Kappenkörper (310) verbunden ist und einen Öffnungs- und Schließvorsprung (331) aufweist, der in die Auslassöffnung (311) einführbar ist, um die Auslassöffnung (311) abzudichten;
wobei die Blisterverpackung **dadurch gekennzeichnet ist, dass** der Kappenkörper (310) einen abgestuften Abschnitt (312) umfasst, der abgestuft an der Randumgebung einer Oberfläche ausgebildet ist, an der die Auslassöffnung (311) ausgebildet ist, und die Kappenabdeckung (330) einen konkaven Abschnitt (332) aufweist, der konkav an ihrer Innenfläche ausgebildet ist, so dass der abgestufte Abschnitt (312) des Kappenkörpers (310) passgenau in den konkaven Abschnitt (332) der Kappenabdeckung (330) eingesetzt ist.

2. Der Blisterverpackungsbehälter gemäß Anspruch 1, wobei die Klappkappe (300) einen Verriegelungsabschnitt (311a) umfasst, der von der Innenumfangsfläche der Auslassöffnung (311) vorsteht, um den Öffnungs- und Schließvorsprung (331) daran durch Druck zu fixieren.

3. Blisterverpackungsbehälter nach Anspruch 2, wobei die Klappkappe (300) einen Führungsabschnitt (311b) umfasst, der an einem Ende der Auslassöffnung (311) ausgebildet ist, in den der Öffnungs- und Schließvorsprung (331) so eingeführt wird, dass sein Durchmesser in Richtung der Ausgabeseite des Inhalts vergrößert wird, und der Öffnungs- und Schließvorsprung (331) in Richtung der Ausgabeseite des Inhalts in dem Zustand, in dem er in die Ausgabebohrung (311) eingeführt ist, einen vergrößerten Durchmesser aufweist.

4. Der Blisterverpackungsbehälter gemäß Anspruch 3, wobei der Öffnungs- und Schließvorsprung (331) einen Abschnitt mit maximalem Durchmesser (331a) aufweist, der kleiner ist als ein Abschnitt mit maximalem Durchmesser des Führungsabschnitts (311b) und größer ist als ein Abschnitt mit minimalem Durchmesser des Führungsabschnitts (311b).

5. Der Blisterverpackungsbehälter gemäß Anspruch 1, der ferner umfasst:
ein Verpackungsteil (400), das sich vom Einlass des Behälterteils (100) erstreckt, um die Klappkappe (300) darin dichtend aufzunehmen; und
eine Trennlinie (500), die an einem Verbindungsabschnitt zwischen dem Behälterteil (100) und dem Verpackungsteil (400) ausgebildet ist.

6. Blisterverpackungsbehälter gemäß Anspruch 5, wobei das Verpackungsteil (400) einen Aufnahmeabschnitt (410) umfasst, in dem das Kappenscharnier (320) aufgenommen ist, und der Aufnahmeabschnitt (410) von einem bestimmten Abschnitt des Verpackungsteils (400) nach außen vorsteht.

7. Blisterverpackungsbehälter gemäß Anspruch 6, wobei das Kappenscharnier (320) einen ersten Verbindungsabschnitt (321), der mit dem Kappenkörper (310) verbunden ist, einen zweiten Verbindungsabschnitt (322), der mit der Kappenabdeckung (330) verbunden ist, und einen Faltabschnitt (323) umfasst, der den ersten Verbindungsabschnitt (321) und den zweiten Verbindungsabschnitt (322) verbindet, wobei der erste Verbindungsabschnitt (321) und der zweite Verbindungsabschnitt (322) um den Faltabschnitt (323) herum zueinander gefaltet sind und sich zum Faltabschnitt (323) hin verjüngen, so dass in einem Zustand, in dem die Innenfläche des ersten Verbindungsabschnitts (321) mit der Innenfläche des zweiten Verbindungsabschnitts (322) in Kontakt kommt, die Innenfläche des ersten Verbindungsabschnitts (321) parallel zur Innenfläche des zweiten Verbindungsabschnitts (322) ist, und die Außenfläche des ersten Verbindungsabschnitts (321) als eine erste geneigte Fläche (321a) ausgebildet ist, die von der Innenfläche des ersten Verbindungsabschnitts (321) abgeschrägt ist, während die Außenfläche des zweiten Verbindungsabschnitts (322) als eine zweite geneigte Fläche (322a) ausgebildet ist, die von der Innenfläche des zweiten Verbindungsabschnitts (322) abgeschrägt ist.

## Revendications

1. Récipient d'emballage blister comprenant:
une partie récipient (100) destinée à recevoir un contenu;
une partie épaulement (200) insérée de manière fixe dans une entrée de la partie récipient (100); et
un capuchon à rabat (300) comprenant un corps de capuchon (310) relié de manière intégrale à la partie épaulement (200) et comportant un orifice de décharge (311) adapté pour décharger le contenu de celui-ci, et un couvercle de bouchon (330) relié de manière pliable au corps de bouchon (310) par l'intermédiaire d'une charnière de bouchon (320) et comportant une saillie d'ouverture et de fermeture (331) pouvant être insérée dans l'orifice de décharge (311) pour fermer hermétiquement l'orifice de décharge (311);
ledit emballage blister étant **caractérisé en ce que** le corps de bouchon (310) comprend une partie en gradins (312) formée en gradins sur la périphérie du bord d'une surface où l'orifice de décharge (311) est formé, et le couvercle de bouchon (330) comprend une partie concave (332) formée de manière concave sur sa surface intérieure, de sorte que la partie en gradins (312) du corps de bouchon (310) s'insère de manière ajustée dans la partie concave (332) du couvercle de bouchon (330).

2. Le récipient d'emballage blister selon la revendication 1, dans lequel le capuchon à rabat (300) comprend une partie de verrouillage (311a) faisant saillie à partir de la surface périphérique interne du trou de décharge (311) pour fixer par compression la saillie d'ouverture et de fermeture (331) à celui-ci.

3. Le récipient d'emballage blister selon la revendication 2, dans lequel le capuchon à rabat (300) comprend une partie de guidage (311b) formée à une extrémité du trou de décharge (311) dans lequel la saillie d'ouverture et de fermeture (331) est insérée de manière à être agrandie en diamètre vers la direction de décharge du contenu, et la saillie d'ouverture et de fermeture (331) est formée avec un diamètre agrandi vers la direction de décharge du contenu dans l'état d'être insérée dans l'orifice de décharge (311).

4. Le récipient d'emballage blister selon la revendication 3, dans lequel la saillie d'ouverture et de fermeture (331) a une partie de diamètre maximal (331a) plus petite qu'une partie de diamètre maximal de la partie de guidage (311b) et plus grande qu'une partie de diamètre minimal de la partie de guidage (311b).

5. Le récipient d'emballage blister selon la revendication 1, comprenant en outre:
une partie d'emballage (400) s'étendant depuis l'entrée de la partie récipient (100) pour recevoir de manière étanche le bouchon à rabat (300) à l'intérieur; et une ligne de découpe (500) formée sur une partie de connexion entre la partie récipient (100) et la partie d'emballage (400).

6. Récipient d'emballage blister selon la revendication 5, dans lequel la partie d'emballage (400) comprend une partie de logement (410) dans laquelle la charnière du couvercle (320) est logée, et la partie de logement (410) fait saillie vers l'extérieur à partir d'une partie donnée de la partie d'emballage (400).

7. Le récipient d'emballage blister selon la revendication 6, dans lequel la charnière du couvercle (320) comprend une première partie de connexion (321) reliée au corps du couvercle (310), une deuxième partie de connexion (322) reliée au couvercle (330) et une partie pliable (323) reliant la première partie de connexion (321) et la deuxième partie de connexion (322), la première partie de connexion (321) et la deuxième partie de connexion (322) étant pliées l'une vers l'autre autour de la partie pliable (323) et étant effilées vers la partie pliable (323), de sorte que dans un état où la surface intérieure de la première partie de connexion (321) entre en contact avec la surface intérieure de la deuxième partie de connexion (322), la surface interne de la première partie de connexion (321) est parallèle à la surface interne de la deuxième partie de connexion (322), et la surface extérieure de la première partie de connexion (321) est formée comme une première surface inclinée (321a) qui est inclinée par rapport à la surface intérieure de la première partie de connexion (321), tandis que la surface extérieure de la deuxième partie de connexion (322) est formée comme une deuxième surface inclinée (322a) qui est inclinée par rapport à la surface intérieure de la deuxième partie de connexion (322).
